# EUROPÄISCHE PATENTANMELDUNG

(11) **EP 1 582 639 A2**
(43) Veröffentlichungstag der Anmeldung: **05.10.2005**
(21) Anmeldenummer: 05004599.6
(22) Anmeldetag: 03.03.2005
(51) Int. Cl.: E04B 1/343

(54) **Mobiles, variables Gebäude**

(30) Priorität: 01.04.2004 DE 102004016100; 09.11.2004 DE 102004054250
(71) Anmelder: Mollerus, Josef, Dipl.-Ing., 88709 Meersburg (DE)
(72) Erfinder: Mollerus, Josef, Dipl.-Ing., 88709 Meersburg (DE)
(74) Vertreter: Weiss, Peter

(57) **Zusammenfassung**

Bei einem mobilen, variablen Gebäude mit gegenüber seinem Transportzuatand erweiterbarem Raumangebot bei stationärem Gebrauch, soll das Gebäude (1) als in sich steifer, transportabler Mittelbau (2) mit Satteldach (3) ausgebildet sein, sollen auf dessen beiden Längsseiten über die Gebäudelänge sich erstreckende, seitlich ausfahrbare Gebäudeteile (4, 5) vorgesehen sein, deren schräge Dächer (6, 7) in ausgefahrenem Zustand der Gebäudeteile (4, 5) vorgesehen sind, sollen das jeweilige Dachteil (8, 9) des Satteldachs (3) des Mittelbaus (2) seitlich erweitern.

## Beschreibung

Die Erfindung bezieht sich auf ein mobiles, variables Gebäude mit gegenüber seinem Transportzustand erweiterbarem Raumangebot bei stationärem Gebrauch.

Es ist bekannt, komfortable Wohnwagen seitlich mit erkerartigen Koffern auszustatten. In der Regel handelt es sich um einen einzigen Raum im Inneren des Wohnwagens, meistens einen Wohnraum, der geräumiger sein soll, als dies bei der Breite eines Wohnwagens ohne Koffer möglich wäre. Während des Wohnwagentransports sind die Koffer bis auf die Wohnwagenbreite in den Wohnwagen eingefahren. Wird letzterer stationär genutzt, können die Koffer ausgefahren werden, wodurch dann der durch die Koffer erweitert Raum geräumiger ist.

Das bekannte hat die Nachteile, dass selbst grosse Wohnwagen wegen ihrer Tauglichkeit für den Strassenverkehr in ihrer Breite begrenzt sind. Ihr Raumangebot ändert sich auch bei Verwendung eines oder zweier Koffer nur unwesentlich, weil ja nur einige Bereiche in begrenztem Umfang erweiterbar sind. Weil die Koffer zum Zweck des Transports des Wohnwagens in diesen einfahrbar gestaltet sein müssen, sind sie in der Regel jeweils mit einem Flachdach versehen. Dies führt bei ausgefahrenen Koffern und starker Sonneneinstrahlung zu grosser Hitze im Inneren des Wohnwagens und ruft gegenüber Nässe, insbesondere Schlagregen, häufig Abdichtungsprobleme hervor.

Bei bekannten Wohnwagen und Wohnanhängern wird das Raumangebot häufig durch Wohnzelte erweitert. Dies ist nachteilig, weil die Vorzelte auf- und abgebaut sowie untergebracht werden müssen, die Einrichtung gesichert werden muss und Wetterabhängigkeit besteht.

Die Erfindung liegt der Aufgabe zugrunde, ein mobiles, variables Gebäude zu schaffen, das bei stationärem Gebrauch ein etwa doppelt so grosses Raumangebot gegenüber dem Transportzustand des Gebäudes erreicht, und dessen Einrichtung bei stationärem Gebrauch des Gebäudes und in dessen Transportzustand nicht oder zumindest nur unwesentlich verändert werden muss.

Erfindungsgemäss wird die Aufgabe durch die in den Ansprüchen 1 und 2 aufgeführten Merkmale gelöst.

Die Erfindung weist gegenüber dem Bekannten die Vorteile auf, dass das Gebäude trotz seiner grossen Geräumigkeit in vollem Umfang mobil bleibt. Wie jedes Haus mit einem Satteldach ist auch das neue, mobile, variable Gebäude gegen Witterungseinflüsse ausreichen geschützt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig.1 eine perspektivische Ansicht des erfindungsgemässen, mobilen, variablen Gebäudes mit einem Mittelbau sowie zwei ausgefahrenen, seitlichen Gebäudeteilen,
Fig.2 den Grundriss des Gebäudes gemäss Fig.1 mit einer Möglichkeit der Innenaufteilung,
Fig.3 das mobile, variable Gebäude gemäss Fig.1, bei dem die seitlichen Gebäudeteile für den Transport in den in sich steifen Mittelbau eingefahren sind,
Fig.4 einen Querschnitt durch das mobile, variable Gebäude gemäss Fig.1, bei dem jedoch eines der beiden seitlichen Gebäudeteile in den in sich steifen Mittelbau eingefahren ist,
Fig.5 in gegenüber der Darstellung der Fig.4 vergrössertem Massstab ein Detail eines Laufrads sowie einer Dichtvorrichtung an einem seitlichen Gebäudeteil,
Fig.6 einen Querschnitt durch das mobile, variable Gebäude gemäss Fig. 1, aufgesetzt auf ein Fahrwerk zum Transport des mobilen Gebäudes als Anhänger,
Fig.7 einen schematisch dargestellten Querschnitt durch den Bereich zwischen dem Dach der seitlichen Gebäudeteile 4, 5 und dem Dachteil 8, 9 des Mittelbaus 2 in ausgefahrener Gebrauchslage der Gebäudeteile 4, 5 aus dem Mittelbau 2.
Fig.8 einen schematisch dargestellten Querschnitt durch den Bereich zwischen dem Dach 6, 7 und Dach 8, 9 in eingefahrener Gebrauchslage,
Fig.9 einen schematisch dargestellten Grundriss eines weiteren Ausführungsbeispieles.

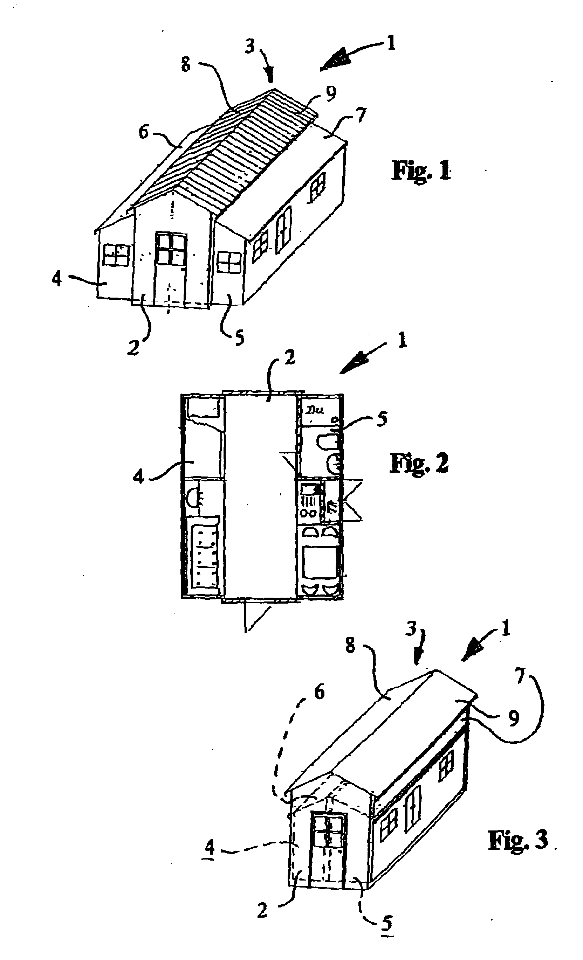

Das mobile, variable Gebäude 1 (Fig.1) umfasst einen transportablen Mittelbau 2 mit einem Satteldach 3 sowie seitlich aus dem Mittelbau 2 ausfahrbare, jeweils mit schrägen Dächern 6, 7 versehene Gebäudeteile 4,5. Sind die beiden Gebäudeteile 4,5 seitlich ausgefahren, wie dies in Fig. 1 der Zeichnungen dargestellt ist, so bilden ihre schrägen Dächer 6,7 Verlängerungen für das Satteldach 3. Dadurch ergibt sich die Erscheinung eines breiten Hauses mit architektonisch vorteilhaft abgesetzter Dachfläche.

In den beiden, seitlich ausfahrbaren Gebäudeteilen 4,5 befinden sich alle Installationen des mobilen, variablen Gebäudes 1, wie dies der in Fig.2 der Zeichnungen dargestellte Grundriss zeigt, nämlich beispielsweise Bad, WC, Küche, Essplatz, Schlafraum, Wohnraum - jeweils mit den entsprechenden Installationen und Einrichtungsgegenständen. Der Mittelbau 2 bleibt von Inneneinrichtung frei. Dadurch können die beiden seitlichen Gebäudeteile 4,5 zum Zweck des Transports des mobilen, variablen Gebäudes 1 in den Mittelbau 2 eingefahren werden (Fig.3).

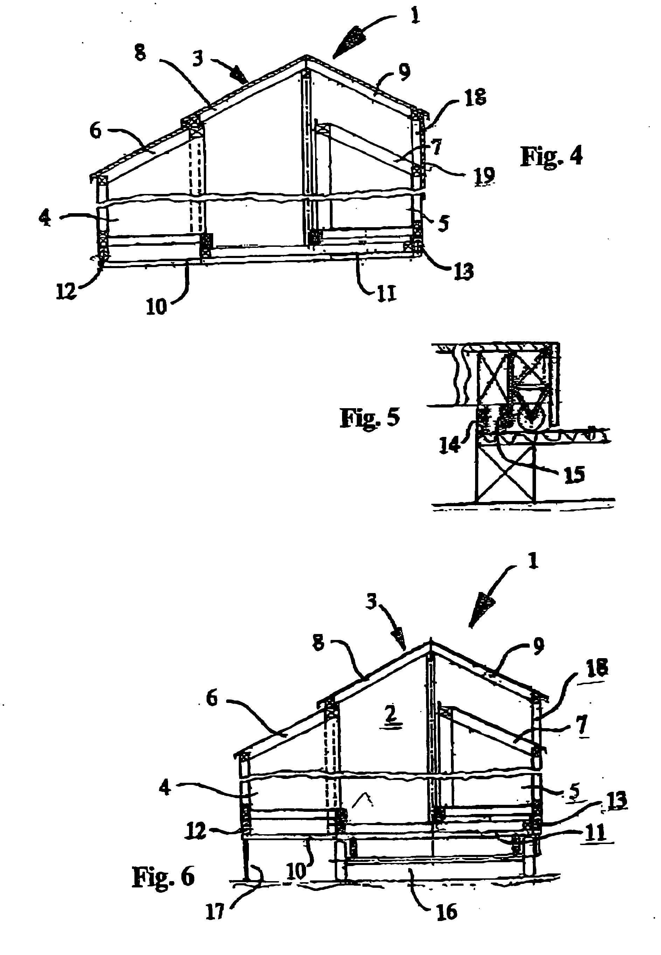

Aus der Querschnittdarstellung der Fig.4 ist ersichtlich, wie beispielsweise das eine seitliche Gebäudeteil 1 aus dem Mittelbau 2 ausgefahren und das andere seitliche Gebäudeteil 5 in den Mittelbau 2 eingefahren ist.

Der Mittelbau 2 (Fig.4) weist in seinem Bodenbereich seitlich herausziehbare Führungsschienen 10, 11 auf. In den äusseren Bodenbereichen der seitlich ausfahrbaren Gebäudeteile 4, 5 sind an diesen Laufräder 12, 13 frei drehbar gelagert, die auf den Führungsschienen 10, 11 laufen. Auf diese Weise ist ein leichtes Aus- und Einfahren der Gebäudeteile 4,5 gegeben.

Im Bodenbereich des Mittelbaus 2 des mobilen, variablen Gebäudes 1 sind feststehende Dichtungen vorgesehen, die zusammen mit Dichtungen an den seitlich ausfahrbaren Gebäudeteilen 4, 5 den Bodenbereich des mobilen, variablen Gebäudes 1 nach aussen hin abdichten.

Auch im oberen Bereich des Mittelbaus 2 des mobilen, variablen Gebäudes 1 sind feststehende Dichtungen vorgesehen, die zusammen mit Dichtungen an den seitlich ausfahrbaren Gebäudeteilen 4, 5 den oberen Bereich des mobilen, variablen Gebäudes 1 nach aussen hin abdichten. Auf gleiche Weise, wie in Fig.5 gezeigten Bodenabdichtungen werden auch die senkrechten Seiten des Gebäudes 1 gegeneinander abgedichtet.

Dem mobilen, variablen Gebäude 1 kann ein eigenes Fahrwerk 16 (Fig.6) zugeordnet sein. In diesem Fall ist den Führungsschienen 10, 11 jeweils eine Stütze 17 zugeordnet, die den Höhenausgleich zwischen der Unterkante des mobilen, variablen Gebäudes 1 und dem Gelände überbrückt, auf dem das mobile, variable Gebäude 1 steht.

Sind beide seitlichen Gebäudeteile 4, 5 in den Mittelbau 2 des mobilen, variablen Gebäudes 1 eingefahren (Fig.3), dann ergibt sich zunächst ein seitlich offener Zwischenraum 18 (Fig.4, 6) jeweils von der Traufe eines jeden Dachteils 8, 9 des Satteldachs 3 des Mittelbaus 2 des Gebäudes 1 über die Länge des Mittelbaus 2 bis zu den Dächern 6, 7 der seitlichen Gebäudeteile 4, 5. Dieser zwischenraum 18 wird jeweils durch eine über die Länge des Mittelbaus 2 sich erstreckende, frei nach unten hängende Schürze 19 - flexibel oder starr - zur Überdeckung des Zwischenraums 18 abgedeckt. Diese jeweilige Schürze 19 kann als Dachverbretterung mit Bitumierung und fester Schindeleindeckung ausgeführt sein, die im ausgefahrenen Zustand der seitlichen Gebäudeteile 4, 5 auf den Dachbalken aufliegt und zusammen mit ihnen das Dach der seitlichen Gebäudeteile 4, 5 wie das Satteldach 3 des festen Mittelteils 2 über die Stirnfläche des Gebäudes 1 nach vorn ragen kann und mit dieser harmoniert.
Wie oben erwähnt, befinden sich die Installationen (Bad, WC, Küche, Essplatz, Schlafraum, Wohnraum) in den seitlichen Gebäudeteilen 4, 5.

Das mobile, variable Gebäude 1 ist - wie bei Holzhäusern üblich - in Holzständerbauweise aufgebaut, Gleiches gilt für die Isolierung zwischen den Holzständern, die Aussteifung, die Innen- und Aussenschalung sowie den Dachaufbau.

Der Mittelbau kann anstatt eines Satteldachs ein Pultdach aufweisen. Das ist besonders dann vorteilhaft, wenn anstatt zweier, nur ein seitlich aus- und einfahrbares Gebäudeteil vorgesehen ist.

In diesem Bereich fährt in oben beschriebener Weise der seitliche Gebäudeteil 4 und/oder 5 aus dem Mittelbau 2 heraus und schliesst im Bereich der Dachteile 8, 9 des Daches 3 dicht mit dem Dach 6, 7 des seitlichen Gebäudeteiles 4, 5 ab.

Dabei hat sich als besonders vorteilhaft bei der vorliegenden Erfindung erwiesen, insbesondere an einem unteren Dachbereich 20 direkt an eine Fussfette 22 des Mittelbaues 2, die Schürze 19, vorzugsweise gelenkig um ein Gelenk 23 anzuschlagen.

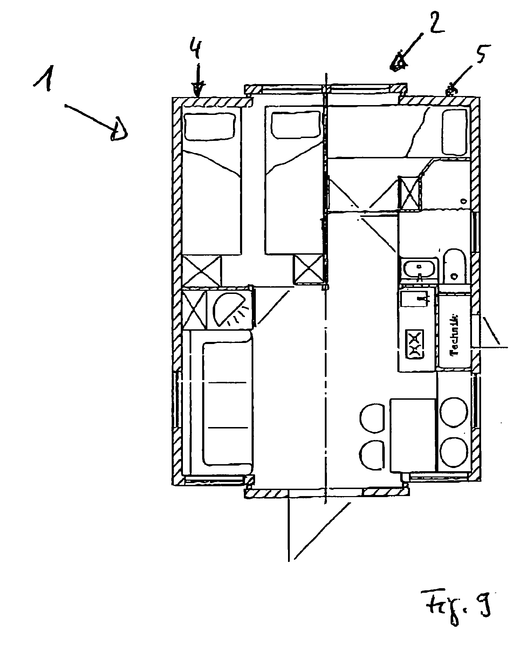

Die Schürze 19 ist vorzugsweise mit einer Platte oder Verbretterung 24 versehen, die als tragendes Element für die dort darauf befestigte Lattung und Dacheindeckung dient. Diese verschliesst in oben beschriebener Weise, wie es auch in Fig.8 angedeutet ist, beim Einfahren des seitlichen Gebäudeteiles 4 und/oder 5 einen Zwischenraum 18 vollständig.

Dabei klappt die Schürze 19 lediglich herunter und verschliesst den Zwischenraum 18.

Die Schürze 19 kann von innen oder aussen dann gegenüber dem verbleibendem seitlichen Gebäudeteil 4, 5 verriegelt oder gesichert werden.

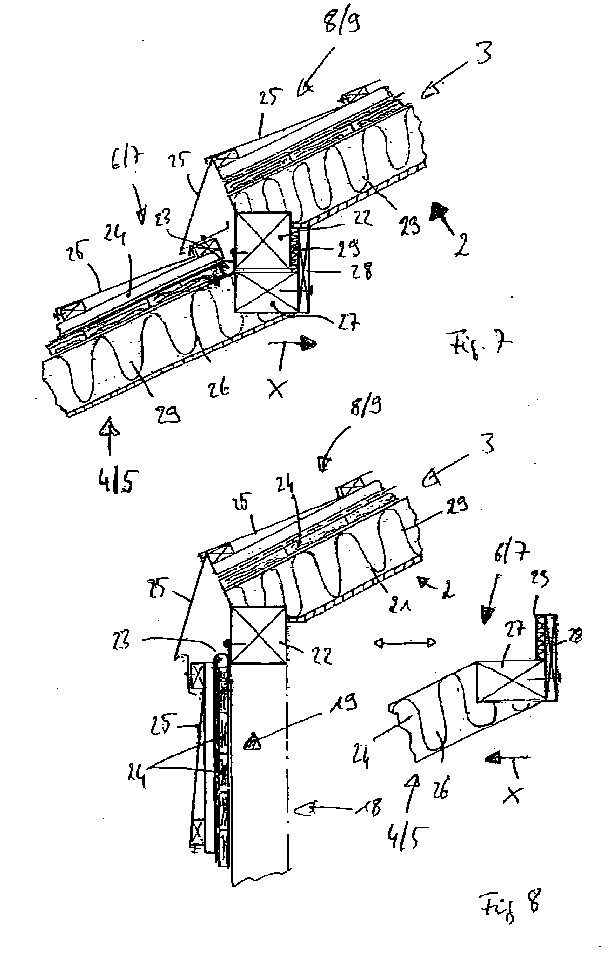

Von Vorteil ist ferner bei der vorliegenden Erfindung, dass der Sparren 21 sowie die Schürze 19 mittels entsprechendem Kragblech 25 überdeckt ist, so dass der vollständige Bereich zwischen Sparren 21, Fussfettc 22 und Schürze 19 von aussen gegen Schlagregen und Witterung in beiden Gebrauchslagen wie sie in den Fig.7 und B dargestellt sind, geschützt sind.

Zudem ist von Vorteil, dass an die Sparren 26 des seitlichen Gebäudeteiles 4, 5 bzw. Schrägdach 6, 7 ein First 27 endseits anschliesst, von welchem ein Haltebrett 28 nach oben abragt und ggf. mit einer zusätzlichen Dämmung 29 versehen ist, wobei das Haltebrett 28 den Anschlag beim Ausfahren in dargestellter X-Richtung des seitlichen Gebäudeteiles 4, 5 an der Fussfette 22 des Mittelbaues 2 bzw. des Satteldaches 3 bildet. Die Dämmung 29 bildet gleichzeitig die Isolierung in ausgefahrenem Zustand gemäss Fig.7 zwischen Mittelbau 2 und seitlichen Gebäudeteil 4, 5.

Ferner ist von Vorteil bei der vorliegenden Erfindung, dass zwischen den Bereichen der einzelnen Sparren 26 auch eine zusätzliche Dämmung 29 vorgesehen sein kann.

Gemäss Fig.9 ist ein Grundriss dargestellt, der in etwa dem gemäss Fig.2 entspricht. Unterschiedlich ist, dass im seitlichen Gebäudeteil 4 ein Doppelbett vorgesehen ist, wobei das eine oder andere einzelne Bett beim Zusammenschieben des Gebäudeteiles 4 in den Mittelbau 2 über das andere Bett verfahrbar ist oder entsprechend übereinander stapelbar oder klappbar ist. Die Erfindung sei hierauf nicht beschränkt.

Zusätzlich ist im seitlichen Gebäudeteil 5 ein Bett quer angeordnet, welches ebenfalls zweiteilig oder zusammenklappbar ist, wenn der seitliche Gebäudeteil 5 in den Mittelbau 2 einfährt.

Dies soll ebenfalls im Rahmen der vorliegenden Erfindung liegen.

### Bezugszeichenliste

| | | | | | |
|---|---|---|---|---|---|
| 1 | Gebäude | 34 | | 67 | |
| 2 | Mittelbau | 35 | | 68 | |
| 3 | Satteldach | 36 | | 69 | |
| 4 | seitliche Gebäudeteil | 37 | | 70 | |
| 5 | seitliche Gebäudeteil | 38 | | 71 | |
| 6 | schräges Dach | 39 | | 72 | |
| 7 | schräges Dach | 40 | | 73 | |
| 8 | Dachteil | 41 | | 74 | |
| 9 | Dachteil | 42 | | 75 | |
| 10 | Führungsschiene | 43 | | 76 | |
| 11 | Führungsschiene | 44 | | 77 | |
| 12 | Laufrad | 45 | | 78 | |
| 13 | Laufrad | 46 | | 79 | |
| 14 | Dichtung | 47 | | | |
| 15 | Dichtung | 48 | | | |
| 16 | Fahrwerk | 49 | | | |
| 17 | Stütze | 50 | | | |
| 18 | Zwischenraum | 51 | | | |
| 19 | Schürze | 52 | | | |
| 20 | unterer Dachbereich | 53 | | X | Richtung |
| 21 | Sparren | 54 | | | |
| 22 | Fussfette | 55 | | | |
| 23 | Gelenk | 56 | | | |
| 24 | Platte oder Verbretterung | 57 | | | |
| 25 | Kragblech | 58 | | | |
| 26 | Sparren | 59 | | | |
| 27 | First | 60 | | | |
| 2B | Haltebrett | 61 | | | |
| 29 | Dämmung | 62 | | | |
| 30 | | 63 | | | |
| 31 | | 64 | | | |
| 32 | | 65 | | | |
| 33 | | 66 | | | |

## Patentansprüche

1. Mobiles, variables Gebäude mit gegenüber seinem Transportzustand erweiterbarem Raumangebot bei stationärem Gebrauch, **dadurch gekennzeichnet, dass** das Gebäude (1) als in sich steifer, transportabler Mittelbau (2) mit Satteldach (3) ausgebildet ist, auf dessen beiden Längsseiten über die Gebäudelänge sich erstreckende, seitlich ausfahrbare Gebäudeteile (4, 5) vorgesehen sind, deren schräge Dächer (6, 7) in ausgefahrenem Zustand der Gebäudeteile (4, 5) vorgesehen sind, das jeweilige Dachteil (8, 9) des Satteldachs (3) des Mittelbaus (2) seitlich erweitern.

2. Mobiles, variables Gebäude mit gegenüber seinem Transportzustand erweiterbarem Raumangebot bei stationärem Gebrauch, **dadurch gekennzeichnet, dass** das Gebäude (1) als in sich steifer, transportabler Mittelbau (2) mit Satteldach (3) ausgebildet ist, auf dessen einer Längsseite ein über die Gebäudelänge sich erstreckendes, seitlich ausfahrbares Gebäudeteil (4 und/oder 5) vorgesehen ist, dessen schräges Dach (6 und/oder 7) in ausgefahrenem Zustand des Gebäudeteils das entsprechende Dachteil (8 und/oder 9) des Satteldachs (3) des Mittelbaus (2) seitlich erweitert.

3. Mobiles, variable Gebäude nach einem der Ansprüche 1 oder 2, **dadurch gekennzeichnet, dass** im Bodenbereich des Mittelbaus (2) des mobilen Gebäudes (1) zum Ausfahren der seitlich ausfahrbaren Gebäudeteile ausziehbare Führungsschienen (10, 11) mit Stützen (17) vorgesehen sind,

4. Mobiles, variables Gebäude nach Anspruch 3, **dadurch gekennzeichnet, dass** die seitlich ausfahrbaren Gebäudeteile (4, 5) jeweils in ihrem Bodenbereich Laufräder (12, 13) aufweisen, die auf den ausziehbaren Führungsschienen (10, 11) laufen.

5. Mobiles, variables Gebäude nach einem der Ansprüche 1 bis 4, **dadurch gekennzeichnet, dass** im Bodenbereich des Mittelbaus (2) des Gebäudes (1) feststehende Dichtungen (14) vorgesehen sind, die zusammen mit Dichtungen (15) an den seitlich ausfahrbaren Gebäudeteilen (4, 5) den Bodenbereich des Gebäudes (1) nach aussen hin abdichten und dass ferner im Traufenbereich und an den senkrechten Stirnflächen des Mittelbaus 2 feststehende Dichtungen vorgesehen sind, die zusammen mit den Dichtungen im Firstbereich und an senkrechten Seiten der ausfahrbaren Gebäudeteile (4, 5) das Gebäude (1) im oberen Bereich nach aussen hin abdichten.

6. Mobiles, variables Gebäude nach einem der Ansprüche 1 bis 5, **dadurch gekennzeichnet, dass** der Mittelbau (2) des Gebäudes (1) fest auf einem Fahrwerk (16) sitzt.

7. Mobiles, variables Gebäude nach einem der Ansprüche 1 bis 6, **dadurch gekennzeichnet, dass** sich die Installationen (Bad, WC, Küche, Essplatz, Schlafraum, wohnraum) in den seitlichen Gebäudeteilen (4, 5) befinden,

8. Mobiles, variables Gebäude nach einem der Ansprüche 1 bis 7, **dadurch gekennzeichnet, dass** jeweils von der Traufe eines jeden Dachteils (8, 9) des Satteldachs (3) des Mittelbaus (2) des Gebäudes (1) über die Länge des Mittelbaus (2) sich erstreckende, frei nach unten hängende flexible oder starre Schürzen (19) zur Überdeckung des Zwischenraums (18) zwischen den Dachteilen (8, 9) des Satteldachs (3) des Mittelbaus (2) und den Dächern (6, 7) der seitlich ausfahrbaren Gebäudeteile (4, 5), wenn diese in den Mittelbau (2) eingefahren sind, vorgesehen sind.

9. Mobiles, variables Gebäude nach Anspruch 8, **dadurch gekennzeichnet, dass** die Schürzen (19) als Dachschalung aus Dachverbretterung, Bitumierung und fester Schindeleindeckung ausgebildet und jeweils länger sind, als die seitlich ausfahrbaren Gebäudeteile (4, 5).

10. Mobiles, variables Gebäude nach einem der Ansprüche 1 bis 9, **dadurch gekennzeichnet, dass** das Gebäude (1) in Holzständerbauweise mit dazwischen angeordneter Isolierung, Innen- und Aussenschalung sowie Dachaufbau wie bei einem feststehenden Holzhaus aufgebaut ist.

11. Mobiles, variables Gebäude nach Anspruch 2, **dadurch gekennzeichnet, dass** der Mittelbau (2) anstatt eines Satteldachs (3) ein Pultdach aufweist.

12. Mobiles, variables Gebäude nach wenigstens einem der Ansprüche 8 bis 9, **dadurch gekennzeichnet, dass** die zumindest eine Schürze (19) an einem unteren Dachbereich (20) des Dachteiles (6 und/oder 9) angeordnet ist.

13. Mobiles, variables Gebäude nach wenigstens einem der Ansprüche 8 bis 12, **dadurch gekennzeichnet, dass** die zumindest eine Schürze (19) aussen an einer Fussfette (22) des Dachteiles (8 und/oder 9) über zumindest ein Gelenk (23) verschwenkbar angeordnet ist.

14. Mobiles, variables Gebäude nach wenigstens einem der Ansprüche 8 bis 13, **dadurch gekennzeichnet, dass** die zumindest eine Schürze (19) mit einer Platte und/oder Verbretterung (24) versehen ist und aussen über zumindest ein Kragblech (25) gegen Unwetter geschützt ist.

15. Mobiles, variables Gebäude nach wenigstens einem der Ansprüche 8 bis 14, **dadurch gekennzeichnet, dass** endseits an zumindest einen Sparren (26) des Daches (6 und/oder 7), des seitlichen Gebäudeteiles (4 und/oder 5) ein First (27) anschliesst, von welchem ein Haltebrett (28), mit ggf. aufgesetzter Dämmung (24) anschliesst, welches in einer ausgefahrenen Lage des seitlichen Gebäudeteiles (4 und/oder 5) an zumindest einem Fussfette (22) des Dachteiles (8) und/oder (9) als Begrenzung anschlägt und gleichzeitig eine Isolierung und Abdichtung bildet.
